(19) Europäisches Patentamt / European Patent Office / Office européen des brevets

(11) **EP 2 090 863 A2**

(12) **EUROPÄISCHE PATENTANMELDUNG**

(43) Veröffentlichungstag:
**19.08.2009 Patentblatt 2009/34**

(51) Int Cl.:
***G01B 11/24*** (2006.01)

(21) Anmeldenummer: **09150219.5**

(22) Anmeldetag: **08.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **18.02.2008   DE 102008009682**

(71) Anmelder: **Siemens Aktiengesellschaft**
**80333 München (DE)**

(72) Erfinder: **Schick, Anton**
**84149 Velden (DE)**

(74) Vertreter: **Maier, Daniel Oliver**
**Siemens AG**
**Postfach 22 16 34**
**80506 München (DE)**

(54) **Triangulationsmessung mittels zweier Graukeilbeleuchtungen**

(57)    Es wird ein Verfahren zum dreidimensionalen Vermessen eines Messobjekts nach dem Prinzip der Triangulation beschrieben. Das Verfahren weist auf ein Beleuchten des Messobjekts (180) mittels eines ersten Beleuchtungslichts (122) unter einer ersten Beleuchtungsrichtung (120), wobei einen räumlich stetig ansteigenden ersten Intensitätsverlauf aufweist, ein Erfassen des durch das erste Beleuchtungslicht (122) beleuchteten Messobjekts (180) unter einer ersten Beobachtungsrichtung (150) mittels eines ersten Bildes" ein Beleuchten des Messobjekts mittels eines zweiten Beleuchtungslichts (142) unter einer zweiten Beleuchtungsrichtung (140), wobei das zweite Beleuchtungslicht (142) einen räumlich stetig ansteigenden zweiten Intensitätsverlauf aufweist, ein Erfassen des durch das zweite Beleuchtungslicht (142) beleuchteten Messobjekts (180) unter einer zweiten Beobachtungsrichtung (150) mittels eines zweiten Bildes und ein Bestimmen der dreidimensionalen Oberfläche des Messobjekts (180) basierend auf dem ersten Bild und dem zweiten Bild. Es wird ferner eine entsprechende Vorrichtung, ein Computerlesbares Speichermedium sowie ein Programm-Element zum Bestimmen der dreidimensionalen Oberfläche eines Messobjekts (180) nach dem Prinzip der Triangulation beschrieben, welche zur Durchführung des oben beschriebenen Verfahrens geeignet sind.

FIG 1

EP 2 090 863 A2

**Beschreibung**

Die Erfindung betrifft die dreidimensionale Vermessung von Messobjekten. Die vorliegende Erfindung betrifft insbesondere ein Verfahren und eine Vorrichtung zum Bestimmen der dreidimensionalen Oberfläche eines Messobjekts nach dem Prinzip der Triangulation. Außerdem betrifft die vorliegende Erfindung ein computerlesbares Speichermedium sowie ein Programm-Element, welche Instruktionen zur Durchführung des erfindungsgemäßen Verfahrens zum Bestimmen der dreidimensionalen Oberfläche eines Messobjekts enthalten.

Derzeit werden bei der 3D-Messung mittels Triangulation verschiedenste Projektionsmuster und Projektionssequenzen verwendet, um die Koordinate der dritten Dimension zu bestimmen. Das Prinzip der Höhenberechnung mittels strukturierter Beleuchtung beruht auf der lateralen Verschiebung des unter einem schrägen Winkel projizierten Musters aufgrund der jeweiligen Objekthöhe an einem bestimmten Ort.

Die laterale Verschiebung x wird über den Abbilddungsmaßstab β auf den Sensor des Beobachtungssystems eines Triangulationssensors übertragen. Der Zusammenhang zwischen der lateralen Verschiebung x, der lateralen Verschiebung x' in der Bildebene des Beobachtungssystems und der Objekthöhe an dem jeweiligen Punkt der Oberfläche des Messobjekts wird durch die folgenden Formeln beschrieben.

$$h = \frac{\Delta x}{\tan \vartheta} \qquad (1)$$

$$h = \frac{\Delta x'}{\beta \cdot \tan \vartheta} \qquad (2)$$

Dabei ist $\vartheta$ der sogenannte Triangulationswinkel, d.h. der Winkel, den der Beleuchtungsstrahl und der Beobachtungsstrahl innerhalb der Triangulationsebene einschließen.

Bekannte, auf dem Prinzip der Triangulation beruhende Messverfahren mit nur einer Beleuchtungs- und einer Beobachtungsrichtung haben jedoch den Nachteil, dass bei steilen Kantenübergängen abgeschattete Bereiche auftreten können, in denen das Höhenprofil des Messobjekts nicht messbar ist.

Um Abschattungseffekte zu vermeiden ist es bekannt, zwei unterschiedliche Projektions- bzw. Beleuchtungsrichtungen einzusetzen. Im Prinzip werden jedoch die durch jeweils eine Beleuchtungsrichtung definierten "Triangulations-Subsysteme" nach den bekannten Methoden betrieben und auch ausgewertet. Dies bedeutet in der Praxis eine Verdopplung der Messzeit und ist deshalb für viele sog. In-line Anwendungen in einer Fertigungslinie nicht akzeptabel. Für eine Phasentriangulationsmessung unter Verwendung eines vierfach Sinusphasengitters, welches dem jeweiligen Beleuchtungslicht ein periodisch sinusförmiges Intensitätsprofil aufprägt, sind bei zwei unterschiedlichen Beleuchtungsrichtungen zumindest 16 Bildaufnahmen erforderlich, um mögliche Mehrdeutigkeiten bei der Höhenermittlung des Messobjekts auszuschließen. Es ist leicht nachzuvollziehen, dass die erforderliche hohe Anzahl von Bildaufnahmen insbesondere in Verbindung mit einer entsprechenden aufwendigen Auswertung der einzelnen Bildaufnahmen zu einer hohen Mess- und/oder Auswertezeit führt.

Der vorliegenden Erfindung liegt die Aufgabe zugrunde, die auf dem Prinzip der Triangulation beruhende dreidimensionale Vermessung von Messobjekten im Hinblick auf kürzere Messzeiten zu verbessern.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Verfahren zum Bestimmen der dreidimensionalen Oberfläche eines Messobjekts nach dem Prinzip der Triangulation beschrieben. Das beschriebene Verfahren weist auf (a) ein Beleuchten des Messobjekts mittels eines ersten Beleuchtungslichts unter einer ersten Beleuchtungsrichtung, wobei das erste Beleuchtungslicht innerhalb einer ersten Triangulationsebene senkrecht zu der ersten Beleuchtungsrichtung einen räumlich stetig ansteigenden ersten Intensitätsverlauf aufweist, (b) ein Erfassen des durch das erste Beleuchtungslicht beleuchteten Messobjekts unter einer ersten Beobachtungsrichtung, welche zusammen mit der ersten Beleuchtungsrichtung die erste Triangulationsebene aufspannt, mittels eines ersten Bildes, (c) ein Beleuchten des Messobjekts mittels eines zweiten Beleuchtungslichts unter einer zweiten Beleuchtungsrichtung, wobei das zweite Beleuchtungslicht innerhalb einer zweiten Triangulationsebene senkrecht zu der zweiten Beleuchtungsrichtung einen räumlich stetig ansteigenden zweiten Intensitätsverlauf aufweist, (d) ein Erfassen des durch das zweite Beleuchtungslicht beleuchteten Messobjekts unter einer zweiten Beobachtungsrichtung, welche zusammen mit der zweiten Beleuchtungsrichtung die zweite Triangulationsebene aufspannt, mittels eines zweiten Bildes, und (e) ein Bestimmen der dreidimensionalen Oberfläche des Messobjekts basierend auf dem ersten Bild und dem zweiten Bild.

Dem beschriebenen Verfahren zum dreidimensionalen Vermessen der Oberfläche eines Messobjekts liegt die Erkenntnis zugrunde, dass durch eine Kombination von zwei sog. Graukeilbeleuchtungen, die bevorzugt aus unterschiedlichen Richtungen auf das zu vermessende Messobjekt projiziert werden, auf besonders einfache Weise das Höhenprofil eines dreidimensionalen Messobjekts vermessen werden kann.

Bei dem Bestimmen der dreidimensionalen Oberfläche des Messobjekts basierend auf dem ersten Bild und dem zweiten Bild kann eine durch eine Höhenausdehnung des Messobjekts verursachte räumliche Veränderung des ersten Intensitätsverlaufs und des zweiten Intensitätsverlaufs berücksichtigt werden.

Zur Höhenbestimmung der einzelnen Pixel der Oberfläche des Messobjekts ist dabei im Gegensatz zu bekannten Triangulationsverfahren ein erheblich geringerer Rechenaufwand für die Auswertung der durch die Höhenausdehnung des Messobjekts räumlich verzerrten Intensitätsverläufe erforderlich. Dies gilt insbesondere im Vergleich zu der bekannten Sinusgitter-Phasentriangulation, bei der auf das Messobjekt nacheinander zwei mit einer hinsichtlich der Beleuchtungsintensität unterschiedlichen Gitterperiode räumlich periodisch modulierten Muster projiziert und die durch die Objekthöhe verursachten Veränderungen bzw. Verschiebungen der Projektionsmuster ausgewertet werden.

Die Bestimmung der Höhenposition eines Pixels der zu vermessenden Oberfläche beruht auf der Tatsache, dass durch die Graukeilbeleuchtung bzw. dem linear über dem Ort ansteigenden Intensitätsverlauf die einzelnen Pixel quasi kodiert werden. Dies hätte bei einem ebenen und homogen streuenden Objekt zur Folge, dass aus der jeweiligen Beobachtungsrichtung ebenfalls ein unverzerrter Graukeil auf einen Kamerachip einer geeigneten Lichterfassungseinrichtung abgebildet wird. Je nach lokaler Objekthöhe ist der Graukeil jedoch im Bild lateral verschoben. Dies bedeutet, dass aus der Pixelhelligkeit die Lateralverschiebung $\Delta x$ eines jeden projizierten Helligkeitswertes bestimmt und daraus die Höhenlage des entsprechenden Pixels berechnet werden kann.

Gemäß einem Ausführungsbeispiel der Erfindung sind die erste Triangulationsebene und die zweite Triangulationsebene identisch sind. Dies bedeutet, dass die erste und die zweite Triangulationsebene zu einer gemeinsamen Triangulationsebene zusammen fallen. In dieser gemeinsamen Triangulationsebene liegen dann die optischen Achsen des ersten und des zweiten Beleuchtungslichts und des ersten und des zweiten Beobachtungslichts.

Die Verwendung einer gemeinsamen Triangulationsebene hat den Vorteil, dass bei einem entsprechenden zur Durchführung des beschriebenen Verfahrens geeigneten Triangulationssensor sämtliche optischen Komponenten in einer gemeinsamen Ebene angeordnet werden können. Eine optische Justage der Komponenten eines derartigen Triangulationssensors wird dadurch erheblich vereinfacht. Dies gilt sowohl für den Aufbau eines derartigen Triangulationssensors als auch für eine ggf. erforderliche Re-Justage eines sich bereits in Betrieb befindlichen Triangulationssensors.

Gemäß einem weiteren Ausführungsbeispiel der Erfindung sind die erste Beobachtungsrichtung und die zweite Beobachtungsrichtung identisch sind. Dies bedeutet, dass auf einfache Weise sowohl das erste Beobachtungslicht als auch das zweite Beobachtungslicht von ein und demselben Lichtempfänger aufgenommen werden können.

Der Lichtempfänger kann ein Zeilensensor oder ein lichtempfindlicher Flächensensor wie beispielsweise ein CCD oder ein CMOS Chip sein. Im Falle der Verwendung eines Zeilensensors wird bei dem beschriebenen Verfahren lediglich eine Zeile von Objektpunkten vermessen. Dies bedeutet, dass für eine vollständige dreidimensionale Vermessung der Oberfläche eines Messobjekts noch eine Relativbewegung zwischen einem zur Durchführung des beschriebenen Verfahrens geeigneten Triangulationssensor und dem Messobjekt durchgeführt werden muss.

Gemäß einem weiteren Ausführungsbeispiel der Erfindung sind die erste Beleuchtungsrichtung und die zweite Beleuchtungsrichtung unterschiedlich. Durch die Verwendung von unterschiedlichen Beleuchtungsrichtungen können auf vorteilhafte Weise Abschattungseffekte eliminiert und auch Objekte mit einer großen Höhenausdehnung vollständig vermessen werden.

Abschattungseffekte können bevorzugt mittels zweier nacheinander bzw. sequentiell durchgeführter Aufnahmen herausgerechnet werden. Durch die beiden getrennten Aufnahmen unter jeweils einer aus einer anderen Richtung einfallenden Graukeilbeleuchtung des Messobjekts können auf verschiedenen Seiten des Messobjekts entstehende Abschattungen jeweils durch eine Graukeilbeleuchtung von der anderen Seite eliminiert werden. Bei einer entsprechenden Auswertung eines Bildes, welches das zu vermessende Messobjekt lediglich unter einer einzigen Graukeilbeleuchtung zeigt, kann für die aktivierte Graukeilbeleuchtung eine besonders hohe Messgenauigkeit erzielt werden. Dies kann im Ergebnis zu einer im Vergleich zu einer gleichzeitigen doppelten Graukeilbeleuchtung zu einer verbesserten Höhenbestimmung der Messobjekts führen.

Gemäß einem weiteren Ausführungsbeispiel der Erfindung sind ein erster Triangulationswinkel zwischen der ersten Beleuchtungsrichtung und der ersten Beobachtungsrichtung und ein zweiter Triangulationswinkel zwischen der zweiten Beleuchtungsrichtung und der zweiten Beobachtungsrichtung gleich groß. Damit kann insbesondere für den oben beschriebenen Fall, bei dem die erste Beobachtungsrichtung und die zweite Beobachtungsrichtung zu einer gemeinsamen Beobachtungsrichtung innerhalb einer gemeinsamen Triangulationsebene zusammen fallen, das beschriebene Verfahren mit einem symmetrisch aufgebauten Triangulationssensor durchgeführt werden. Dies erleichtert nicht nur den mechanischen Aufbau und die Justage des Sensors, vielmehr wird auch die Auswertung der beiden durch die jeweilige Objekthöhe verzerrten Graukeilprojektionen erheblich erleichtert.

Durch die symmetrische Anordnung für die beiden Graukeil-Projektionsmessungen kann infolge der besonders einfachen Auswertung der Messergebnisse in erheblichem Umfang Messzeit eingespart werden. Die Zeitersparnis ist insbesondere dann hoch, wenn das zu vermessende Objekt möglichst homogene Lichtstreueigenschaften aufweist. In diesem Fall entspricht nämlich der jeweilige Grauwert im Beobachtungslicht direkt dem Höhenwert des jeweiligen Pixels.

Gemäß einem weiteren Ausführungsbeispiel der Erfindung steigen der erste Intensitätsverlauf und der zweite Intensitätsverlauf in einander entgegen gesetzten Richtungen an. Dies bedeutet, dass die Projektionen aus zwei unterschiedlichen und bevorzug zumindest in einer Raumrichtung einander gegenüberliegenden Richtungen entgegengesetzt verlaufende Grauwertanstiege aufweisen. Dies ist insbesondere bei gleichen absoluten Projektionswinkeln in Bezug auf eine Referenzebene des Messobjekts vorteilhaft, wobei beispielsweise eine linke Graukeilprojektion einen positiven Steigungsverlauf des Grauwerts und eine rechte Graukeilprojektion einen negativen Steigungsverlauf des Grauwerts aufweist.

Gemäß einem weiteren Ausführungsbeispiel der Erfindung umfasst das Verfahren zusätzlich ein Bilden eines Summensignals aus den durch die Höhenausdehnung des Messobjekts veränderten ersten und zweiten Intensitätsverläufen.

Die beschriebene Bildung des Summensignals bei zwei zueinander symmetrischen Graukeilprojektionen hat den Vorteil, dass der Verlauf des Summensignals direkt das dreidimensionale Höhenprofil des zu vermessenden Objekts widerspiegeln kann. Dies gilt jedenfalls für die örtlichen Bereiche, die keine Lichtabschattungen für eine der beiden Graukeilbeleuchtungen aufweisen. Das Summensignal stellt dabei ortsaufgelöst die beobachtete Lichtintensität als Funktion des Abstandes des jeweiligen sich in der Triangulationsebene befindlichen Bildpunktes von der optischen Achse des Beobachtungslichts bzw. von der gemeinsamen Beobachtungsrichtung dar.

Gemäß einem weiteren Ausführungsbeispiel der Erfindung weist das Verfahren zusätzlich auf ein Beleuchten des Messobjekts mittels eines dritten Beleuchtungslichts unter einer dritten Beleuchtungsrichtung, wobei das dritte Beleuchtungslicht innerhalb einer dritten Triangulationsebene senkrecht zu seiner Ausbreitungsrichtung ein räumlich konstantes Intensitätsprofil aufweist.

Die beschriebene Beleuchtung des Messobjekts mit dem dritten Beleuchtungslicht kann für eine Normierung der Reflektivität der einzelnen Pixel der Oberfläche des Messobjekts verwendet werden. Dabei wird das durch das dritte Beleuchtungslicht beleuchtete Messobjekts unter einer dritten Beobachtungsrichtung erfasst, welche bevorzugt verschieden ist von der dritten Beleuchtungsrichtung und ebenfalls in der gemeinsamen Triangulationsebene liegen kann. Die dritte Beleuchtungsrichtung kann dabei mit der ersten oder der zweiten Beleuchtungsrichtung zusammenfallen, so dass ggf. eine gemeinsame Lichtquelle für das erste oder das zweite Beleuchtungslicht und das für die Normierung zu verwendende dritte Beleuchtungslicht verwendet werden kann. Die unterschiedlichen Intensitätsprofile können dann von einem optischen Element wie beispielsweise einem LCoS (Liquid Crystal on Silicon) Bauelement erzeugt werden.

Bei der beschriebenen Normierung können hinsichtlich der Reflektivität ungleiche Oberflächenbereiche des Messobjekts erkannt und bei einer nachfolgenden Auswertung der höheninduzierten Veränderung der beiden Graukeil-Intensitätsverläufe berücksichtigt werden.

In der Regel ist die Reflektivität von real zu vermessenden Oberflächen nicht homogen. Die beschriebene Normierung, bei der das Messobjekt zumindest innerhalb eines Messfensters mit 100% Helligkeit vollflächig beleuchtet wird und eine Normierungsaufnahme gemacht wird, ermöglicht auch für derartige Messobjekte eine zügige und trotzdem genaue Höhenvermessung.

Bei der beschriebenen Helligkeitsnormierung kann die Reflektivität aller einzelnen in einem bestimmten Messfenster enthaltenen Pixel erfasst und bei einer nachfolgenden Höhenauswertung berücksichtigt werden.

Gemäß einem weiteren Ausführungsbeispiel der Erfindung weist das Verfahren zusätzlich auf ein Beleuchten des Messobjekts mittels eines vierten Beleuchtungslichts unter einer vierten Beleuchtungsrichtung, wobei das vierte Beleuchtungslicht innerhalb einer vierten Triangulationsebene senkrecht zu seiner Ausbreitungsrichtung ein räumlich konstantes Intensitätsprofil aufweist.

Sofern die dritte und die vierte Beleuchtungsrichtung unterschiedlich sind, kann bei der Kalibrieraufnahme durch eine homogene Beleuchtung des Messobjekts aus verschiedenen Richtungen eine besonders homogene Gesamtausleuchtung erreicht werden. Damit kann auch die Reflektivität der einzelnen Pixel der Messoberfläche besonders genau bestimmt und bei einer nachfolgenden Auswertung von Graukeilbeleuchtungen für eine verbesserte Messgenauigkeit bei der Höhenbestimmung verwendet werden.

Auch die dritte Beleuchtungsrichtung kann mit der ersten oder der zweiten Beleuchtungsrichtung zusammenfallen, so dass ggf. eine gemeinsame Lichtquelle für das erste oder das zweite Beleuchtungslicht und das für die verbesserte Normierung zu verwendende vierte Beleuchtungslicht verwendet werden kann. Insbesondere kann die dritte Beleuchtungsrichtung mit der ersten Beleuchtungsrichtung und die vierte Beleuchtungsrichtung mit der zweiten Beleuchtungsrichtung zusammen fallen. Bevorzugt fallen alle bisher genannten Triangulationsebenen zu einer gemeinsamen Triangulationsebene zusammen.

Bei der beschriebenen verbesserten Normierung können hinsichtlich der Reflektivität ungleiche Oberflächenbereiche des Messobjekts besonders sicher erkannt und die jeweils mit einer hohen Genauigkeit bestimmte Reflektivität bei einer nachfolgenden Auswertung berücksichtigt werden.

Gemäß einem weiteren Ausführungsbeispiel der Erfindung wird das Beleuchten des Messobjekts mittels des dritten Beleuchtungslichts und das Beleuchten des Messobjekts mittels des vierten Beleuchtungslichts nacheinander durchgeführt.

Durch zwei sequentiell durchgeführte getrennte Normierungsbeleuchtungen können somit zwei voneinander unabhängige Kalibrierungen vorgenommen werden. Dies ist insbesondere im Fall von Abschattungen durch das Messobjekt vorteilhaft, die im Falle von geeigneten Triangulationswinkeln durch das dritte oder durch das vierte Beleuchtungslicht gezielt ausgeleuchtet werden können. Damit kann auch die Reflektivität des Messobjekts in einem dem ersten bzw. dritten Beleuchtungslicht zugeordneten Abschattungsbereich durch das zweite bzw. vierte Beleuchtungslicht und eine entsprechende Lichterfassung bestimmt werden.

Gemäß einem weiteren Aspekt der Erfindung wird eine Vorrichtung zum Bestimmen der dreidimensionalen Oberfläche eines Messobjekts nach dem Prinzip der Triangulation beschrieben. Die beschriebene Vorrichtung, welche insbesondere zur Durchführung des o. g. Verfahrens eingerichtet ist, weist auf (a) eine erste Lichterzeugungseinrichtung zum Erzeugen eines ersten Beleuchtungslichts unter einer ersten Beleuchtungsrichtung, wobei das erste Beleuchtungslicht innerhalb einer ersten Triangulationsebene senkrecht zu der ersten Beleuchtungsrichtung einen räumlich stetig ansteigenden ersten Intensitätsverlauf aufweist, (b) eine zweite Lichterzeugungseinrichtung zum Erzeugen eines zweiten Beleuchtungslichts unter einer zweiten Beleuchtungsrichtung, wobei das zweite Beleuchtungslicht innerhalb einer zweiten Triangulationsebene senkrecht zu der zweiten Beleuchtungsrichtung einen räumlich stetig ansteigenden zweiten Intensitätsverlauf aufweist, (c) zumindest eine Lichterfassungseinrichtung zum Erfassen unter zumindest einer Beobachtungsrichtung des durch das erste Beleuchtungslicht beleuchteten Messobjekts mittels eines ersten Bildes und des durch das zweite Beleuchtungslicht beleuchteten Messobjekts mittels eines zweiten Bildes, wobei die zumindest eine Beobachtungsrichtung zusammen mit der ersten Beleuchtungsrichtung die erste Triangulationsebene und zusammen mit der zweiten Beleuchtungsrichtung die zweite Triangulationsebene aufspannt, und (d) eine Auswerteeinrichtung zum Bestimmen der dreidimensionalen Oberfläche des Messobjekts basierend auf dem ersten Bild und dem zweiten Bild.

Der beschriebenen Vorrichtung bzw. dem beschriebenen Triangulationssensor liegt die Erkenntnis zugrunde, dass durch eine doppelte Graukeilbeleuchtung mit jeweils einem stetig ansteigendem Intensitätsverlauf in Verbindung mit einer kombinierten Auswertung der durch die Höhenausdehnung des Messobjekts verursachten räumlichen Veränderung bzw. Verzerrung der Graukeil-Intensitätsverläufe auf einfache und vor allem auf schnelle Weise eine dreidimensionale Vermessung des Messobjekts durchgeführt werden kann.

Die Auswerteeinrichtung des beschriebenen Triangulationssensors kann derart eingerichtet sein, dass basierend auf einer durch die Höhenausdehnung des Messobjekts verursachten räumlichen Veränderung des ersten Intensitätsverlaufs und einer räumlichen Veränderung des zweiten Intensitätsverlaufs die dreidimensionale Oberfläche des Messobjekts bestimmbar ist.

Gemäß einem Ausführungsbeispiel der Erfindung weist die erste und/oder die zweite Lichterzeugungseinrichtung eine Lichtquelle und ein optisches Element auf. Das optische Element ist derart eingerichtet, dass ein von der Lichtquelle erzeugter Primärlichtstrahl hinsichtlich seines transversalen Intensitätsprofils bei einem ersten Betriebszustand des optischen Elements in einen räumlich stetig ansteigenden Intensitätsverlauf überführbar ist und bei einem zweiten Betriebszustand des optischen Elements in ein räumlich konstantes Intensitätsprofil überführbar ist.

Eine Umschaltung zwischen den verschiedenen transversalen Intensitätsprofilen zugeordneten Betriebszuständen kann durch eine geeignete Ansteuerung des optischen Elements erfolgen.

Das optische Element kann beispielsweise ein aus Beamern bekanntes Flüssigkristall-Element sein, welches in Durchlichtgeometrie betrieben wird. Ebenso kann das optische Element auch ein dynamisch ansteuerbares Diffraktives Optisches Element sein.

Gemäß einem weiteren Ausführungsbeispiel der Erfindung ist das optische Element ein LCoS-Bauelement. Ein LCoS-Bauelement (Liquid Crystal on Silicon-Bauelement) hat den Vorteil, dass durch eine geeignete Ansteuerung des LCoS-Bauelements die transversale Intensitätsverteilung des von der Lichtquelle emittierten Primärlichtstrahles schnell und präzise an das gewünschte transversale Intensitätsprofil angepasst werden kann. Der Vorteil von LCoS-Bauelementen gegenüber herkömmlichen LCD-Elementen liegt in ihrer Fähigkeit, das Licht zu reflektieren anstatt es durchzulassen. Dadurch können die zur Ansteuerung nötigen Leiterbahnen unter einer reflektierenden Schicht des LCoS-Bauelements angebracht werden. Dies kann den Vorteil haben, dass es bei der Bilddarstellung nicht mehr zu einem sichtbaren Raster kommt, welches häufig auch als "Fliegengittereffekt" bezeichnet wird.

Gemäß einem weiteren Ausführungsbeispiel der Erfindung weist die Lichterfassungseinrichtung eine Zeilenkamera auf. Die Zeilenkamera kann dabei parallel zu der entsprechenden Triangulationsebene orientiert sein.

Für eine vollständige dreidimensionale Vermessung der Oberfläche eines Messobjekts kann dann eine Relativbewegung zwischen dem beschriebenen Triangulationssensor und dem Messobjekt durchgeführt werden. Diese Relativbewegung verläuft zumindest anteilig senkrecht sowohl zu der Triangulationsebene als auch zu der Orientierung der Zeilenkamera.

Insbesondere bei der Verwendung einer Zeilenkamera kann der beschriebene Triangulationssensor mit zwei aus unterschiedlichen Richtungen einfallenden Graukeilbeleuchtungen beispielsweise für eine genaue Vermessung von Paketen verwendet werden, die auf einem Förderband relativ zu der Triangulationssensor bewegt werden.

Gemäß einem weiteren Aspekt der Erfindung wird ein Computerlesbares Speichermedium beschrieben, in dem ein Programm zum Bestimmen der dreidimensionalen Oberfläche eines Messobjekts nach dem Prinzip der Triangulation gespeichert ist. Das Programm ist, wenn es von einem Prozessor ausgeführt wird, zum Durchführen des oben genannten Verfahrens eingerichtet.

Gemäß einem weiteren Aspekt der Erfindung wird ein Programm-Element zum Bestimmen der dreidimensionalen Oberfläche eines Messobjekts nach dem Prinzip der Triangulation beschrieben. Das Programm-Element ist, wenn es von einem Prozessor ausgeführt wird, zum Durchführen des oben genannten Verfahrens eingerichtet.

Das Programm-Element kann als computerlesbarer Anweisungscode in jeder geeigneten Programmiersprache wie beispielsweise in JAVA, C++ etc. implementiert sein. Das Programm-Element kann auf einem computerlesbaren Speichermedium (CD-Rom, DVD, Wechsellaufwerk, flüchtiger oder nicht-flüchtiger Speicher, eingebauter Speicher/ Prozessor etc.) abgespeichert sein. Der Anweisungscode kann einen Computer oder andere programmierbare Geräte derart programmieren, dass die gewünschten Funktionen ausgeführt werden. Ferner kann das Programm-Element in einem Netzwerk wie beispielsweise dem Internet bereitgestellt werden, von dem es bei Bedarf von einem Nutzer herunter geladen werden kann.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Figur 1          zeigt einen Triangulationssensor mit zwei Lichterzeugungseinrichtungen, welche aus unterschiedlichen Richtungen sequentiell zwei Graukeil-Beleuchtungsprofile auf ein Messobjekt projizieren, und einer Lichterfassungseinrichtung zum Erfassen der durch die Höhenausdehnung des Messobjekts verursachten Verzerrung des jeweiligen Graukeil-Intensitätsprofils.

Figur 2a, b und    c zeigen den Verlauf eines Summensignals aus zwei erfassten Graukeilbeleuchtungen eines Messobjekts.

Figur 3          zeigt einen Vergleich der Summen-Lichtintensität von zwei aus unterschiedlichen Richtungen projizierten Graukeilbeleuchtungen für verschieden hohe Messobjekte.

An dieser Stelle bleibt anzumerken, dass sich in der Zeichnung die Bezugszeichen von gleichen oder von einander entsprechenden Elementen lediglich in ihrer ersten Ziffer unterscheiden.

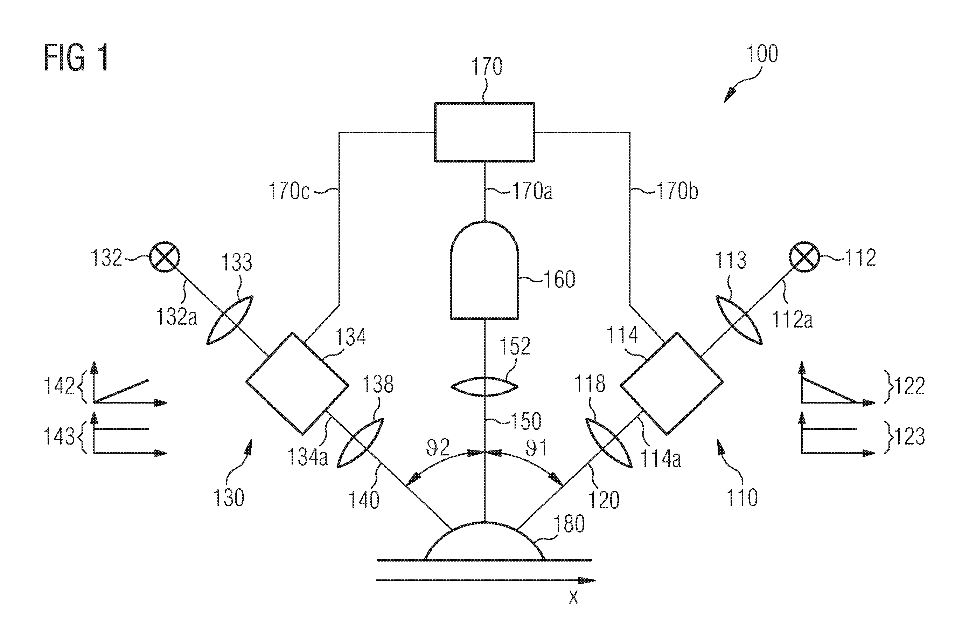

Figur 1 zeigt einen Triangulationssensor 100 mit einer ersten Lichterzeugungseinrichtung 110 und mit einer zweiten Lichterzeugungseinrichtung 130. Die erste Lichterzeugungseinrichtung 110 ist derart eingerichtet, dass unter einer ersten Beleuchtungsrichtung 120 alternativ ein erstes Beleuchtungslicht 122 mit einem stetig ansteigenden Intensitätsverlauf (erste Graukeilbeleuchtung 122) und ein drittes Beleuchtungslicht 123 mit einem räumlich konstanten Intensitätsprofil (erste homogene Beleuchtung 123) auf ein Messobjekt 180 projizierbar sind.

Entsprechend ist die zweite Lichterzeugungseinrichtung 130 derart eingerichtet, dass unter einer zweiten Beleuchtungsrichtung 140 alternativ ein zweites Beleuchtungslicht 142 mit einem stetig ansteigenden Intensitätsverlauf (zweite Graukeilbeleuchtung 142) und ein viertes Beleuchtungslicht 143 mit einem räumlich konstanten Intensitätsprofil (zweite homogene Beleuchtung 143) auf das Messobjekt 180 projizierbar sind. Wie in Figur 1 angedeutet, weisen die beiden Graukeilbeleuchtungen 122 und 142 einander entgegen gesetzte Steigungen auf.

Die durch die beiden Lichterzeugungseinrichtungen 110 und 130 auf das Messobjekt 180 projizierten Graukeilbeleuchtungen 122 und 142 werden unter einer Beobachtungsrichtung 150 von einer Lichterfassungseinrichtung 160 aufgenommen. Die Lichterfassungseinrichtung 160 kann beispielsweise eine innerhalb einer mit der Zeichenebene zusammenfallenden Triangulationsebene und senkrecht zu der Beobachtungsrichtung 150 orientierte Zeilenkamera oder auch eine Flächekamera aufweisen. Gemäß dem hier dargestellten Ausführungsbeispiel erfolgt die Abbildung des entsprechend beleuchteten Messobjekts 180 auf eine Bildebene der Lichterfassungseinrichtung 160 über eine Optik 152.

Die erste Beleuchtungsrichtung 120 schließt mit der Beobachtungsrichtung 150 einem ersten Triangulationswinkel $\vartheta1$ ein. Entsprechend schließt die zweite Beleuchtungsrichtung 140 mit der Beobachtungsrichtung 150 einem zweiten Triangulationswinkel $\vartheta2$ ein. Gemäß dem hier dargestellten Ausführungsbeispiel sind die beiden Winkel $\vartheta1$ und $\vartheta2$ gleich groß, so dass der dargestellte Triangulationssensor 100 einen in Bezug zu der gemeinsamen Beobachtungsrichtung achsensymmetrischen Aufbau aufweist. Ferner liegen alle drei Richtungen, d.h. die erste Beleuchtungsrichtung 120, die zweite Beleuchtungsrichtung 140 und die Beobachtungsrichtung 150 in der gemeinsamen Triangulationsebene.

Die erste Lichterzeugungseinrichtung 110 weist eine Lichtquelle 112 auf, welche einen Primärlichtstrahl 112a emittiert. Der Primärlichtstrahl 112a trifft nach Refraktion an einer Optik 113 als zumindest annähernd paralleles Lichtbündel auf ein optisches Element 114 der Lichterzeugungseinrichtung 110. Gemäß dem hier dargestellten Ausführungsbeispiel ist das optische Element ein LCoS (Liquid Crystal on Silicon) Bauelement 114, welches dem parallelen Primärlichtstrahl 112a in bekannter Weise eine beliebige räumliche Intensitätsmodulation aufprägen kann.

Das LCoS-Bauelement 114 kann durch eine geeignete Ansteuerung in einen ersten Betriebszustand versetzt werden, in dem der aus dem LCoS-Bauelement 114 austretenden Lichtstrahl 114a senkrecht zu seiner Ausbreitungsrichtung und innerhalb der Triangulationsebene die oben beschriebene erste Graukeilbeleuchtung 122 mit einem von links nach rechts stetig ansteigendem Intensitätsverlauf aufweist. In einem zweiten Betriebszustand sorgt das LCoS-Bauelement 114 dafür, dass unter der ersten Beleuchtungsrichtung 120 ein drittes Beleuchtungslicht 123 mit räumlich konstantem Intensitätsprofil auf das Messobjekt trifft.

Der von dem LCoS-Bauelement 114 austretende Lichtstrahl 114a trifft auf eine Optik 118 und wird abhängig von dem Betriebszustand des optischen Elements 114 entweder als erste Graukeilbeleuchtung 122 oder als erste homogene Beleuchtung 123 auf das zu vermessende Messobjekt 180 gerichtet. Infolge der Höhenausdehnung des Messobjekts 180 und des schrägen Beleuchtungswinkels werden gemäß dem Prinzip der Triangulation die Beleuchtungslichtstrahlen lateral, das heißt in Figur 1 in horizontaler Richtung, um eine gewisse Strecke Δx verschoben. Diese objektseitige Lateralverschiebung hängt von der Objekthöhe h und dem Triangulationswinkel $\vartheta 1$ ab.

Die zweite Lichterzeugungseinrichtung 130 ist analog zu der ersten Lichterzeugungseinrichtung 110 aufgebaut und wird deshalb an dieser Stelle nicht im Detail erläutert. Wie in Figur 1 dargestellte, weist die zweite Lichterzeugungseinrichtung 130 eine Lichtquelle 132 zum Erzeugen eines Primärlichtstrahls 132a, eine Optik 133, ein als LCoS-Bauelement ausgebildetes optisches Element 134 zum Erzeugen eines Lichtstrahls 134a entweder mit einem stetig ansteigenden Intensitätsverlauf 142 oder mit einem räumlich konstanten Intensitätsprofil 143 und eine Optik 138 auf.

Der Triangulationssensor 100 weist ferner eine Auswerte- und Steuereinrichtung 170 auf, welche über eine Auswerteleitung 170a mit der Lichterfassungseinrichtung 160 gekoppelt ist. Die Auswerte- und Steuereinrichtung 170 ist über eine Steuerleitung 170b ist mit dem LCoS-Bauelement 114 und über eine Steuerleitung 170c mit dem LCoS-Bauelement 134 verbunden.

Im Folgenden wird ein beispielhaftes Verfahren zur Durchführung einer genauen und trotzdem sehr schnellen Höhenvermessung des Messobjekts 180 beschrieben.

Da die in der Praxis zu vermessenden Messobjekte nicht unbedingt eine über die gesamte Messoberfläche konstante Reflektivität bzw. optische Streustärke aufweisen, ist es aus Gründen der Messgenauigkeit vorteilhaft, wenn zunächst eine Kalibrieraufnahme gemacht wird, bei der die Reflektivität der einzelnen Oberflächenpunkte des Messobjekts ermittelt wird. Die ortsabhängige Reflektivität kann dann bei der Auswertung von Messaufnahmen berücksichtigt werden, bei denen das Messobjekt 180 unter einer Graukeilbeleuchtung 122, 142 beleuchtet wird. Die Kalibrieraufnahme kann somit in geeigneter Weise für eine Normierung verwendet werden.

Die Normierung kann für beide Beleuchtungsrichtungen 120 und 140 gemeinsam oder auch getrennt voneinander vorgenommen werden. Im Falle einer für beide Beleuchtungsrichtungen 120 und 140 getrennt vorgenommenen Normierung werden somit zunächst zwei voneinander unabhängige Datensätze mit der ortsaufgelösten Reflektivität des Messobjekts 180 erzeugt. Diese können dann jeweils einzeln für die Auswertung der entsprechenden Beleuchtungsaufnahme verwendet werden. Die beiden unabhängigen Datensätze können jedoch auch miteinander kombiniert werden und erst dann für die Auswertung der beiden Beleuchtungsaufnahmen verwendet werden.

Die eigentliche Höhenvermessung erfolgt durch eine gemeinsame Auswertung der durch die Normierungsaufnahmen korrigierten Bilder der beiden Graukeilbeleuchtungen 122 und 142 auf dem Messobjekt 180. Auch hier kann eine Bild des Messobjekts 180 mit beiden Graukeilbeleuchtungen 122 und 142 ausgewertet werden. Alternativ können auch zwei Bilder des Messobjekts 180 unter jeweils einer Graukeilbeleuchtungen 122 oder 142 ausgewertet werden. Letzteres empfiehlt sich insbesondere für den Fall, dass die Höhenausdehnung des Messobjekts 180 unter der einen und/oder unter der anderen Graukeilbeleuchtung 122, 142 Abschattungen verursacht.

Um zwischen einer Bildaufnahme zum Zwecke einer Normierung und einer Bildaufnahme zum Zwecke der eigentlichen Höhenvermessung umzuschalten, kann das optische Element 114 und/oder das optische Element 134 durch ein geeignetes Ansteuersignal von der Auswerte- und Steuereinrichtung 170 gezielt zwischen dem oben beschriebenen ersten Betriebszustand und dem ebenfalls oben beschriebenen zweiten Betriebszustand umgeschaltet werden.

Bei der Auswertung eines Bildes, welches das Messobjekt 180 bei zumindest einer Graukeilbeleuchtung 122, 142 zeigt, wird von der Auswerteeinheit 170 gemäß dem bekannten Prinzip der Triangulation die durch die Höhenausdehnung des Messobjekts verursachte Verzerrung bzw. ortsabhängige Verschiebung des jeweiligen Graukeil-Intensitätsverlaufs analysiert.

Die beschriebene unter unterschiedlichen Richtungen projizierte Graukeil-Beleuchtung hat den Vorteil, dass ein Abschattungsbereich des einen Beleuchtungslichts durch dass Messobjekt 180, von der anderen Beleuchtung ausgeleuchtet wird. Somit kann das Messobjekt 180 auch in diesem Abschattungsbereich durch den beschriebenen Triangulationssensor 100 hinsichtlich seiner Höhe vermessen werden.

Zur Auswertung des Höhenprofils des Messobjekts 180 kann auch ein Summensignal aus den ggf. korrigierten bzw. normierten Bildaufnahmen des Messobjekts 180 bei der ersten Graukeilbeleuchtung 122 und bei der zweiten Graukeilbeleuchtung 142 gebildet werden.

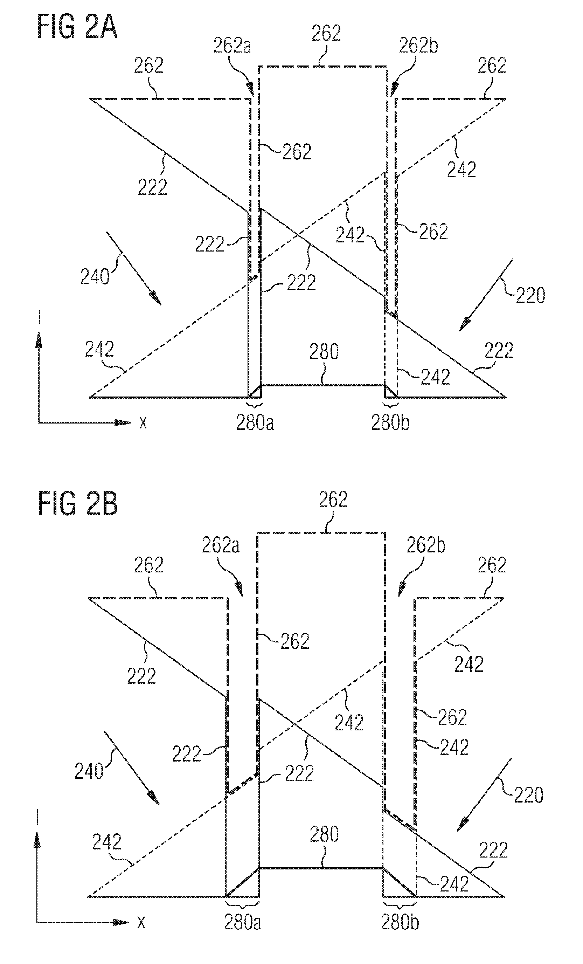

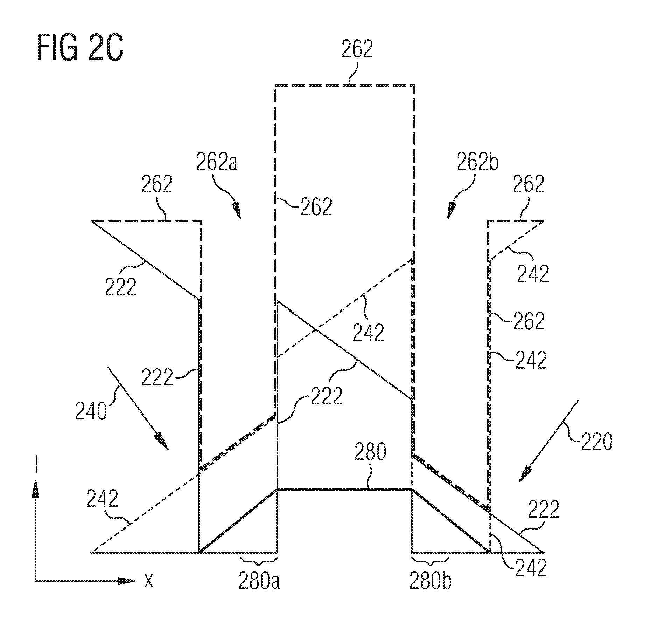

Die Figuren 2a, 2b und 2c zeigen den Verlauf eines derartigen Summensignals von zwei Bildaufnahmen, die das zu vermessenden Messobjekt unter jeweils einer der beiden Graukeilbeleuchtungen darstellen. Dabei ist in der horizontalen Richtung die Position eines Messpunkts entlang einer x-Richtung aufgetragen, in der vertikalen Richtung ist die jeweilige Lichtintensität des betreffenden Messpunkts aufgetragen. Die x-Richtung stimmt dabei mit der in Figur 1 dargestellten x-Richtung überein.

Wie aus den Figuren 2a, 2b und 2c ersichtlich, wird im Folgenden davon ausgegangen, dass unter der ersten Beleuchtungsrichtung 220 von rechts oben die erste Graukeilbeleuchtung 222 auf das Messobjekt 280 projiziert wird. Bei einem Messobjekt mit verschwindender Höhenausdehnung und mit einer homogenen Reflektivität wäre das entsprechende Intensitätsprofil, welches von der Lichterfassungseinrichtung 160 (siehe Figur

1) aufgenommen würde, ein exaktes Dreiecksprofil. Im Folgenden wird davon ausgegangen, dass das Messobjekt 280 und seine Umgebung entlang der x-Richtung eine gleichmäßige Reflektivität haben oder dass alternativ das Ergebnis einer oben beschriebenen Kalibrieraufnahme für die Reflektivität bereits in der Darstellung der Intensität I berücksichtigt ist.

Infolge der Höhenausdehnung der in den Figuren 2a, 2b und 2c dargestellten Objekte 280 wird die rechte vertikale Kante des Objekts zu einem sprunghaften Anstieg des ansonsten weiter linear ansteigenden Intensitätsverlaufs 222 führen. Im Bereich der linken vertikal abfallenden Kante des Messobjekts 280 tritt eine Abschattung 280a auf, innerhalb der die Lichtintensität auf den Wert 0 abfällt.

Entsprechend ist bei der zweiten Graukeilbeleuchtung 242 unter der zweiten Beleuchtungsrichtung 240 von links oben an der linken Kante des Messobjekts 280 ein positiver Intensitätssprung zu beobachten. Ebenfalls entsprechend tritt an der rechten vertikal abfallenden Kante des Messobjekts 280 eine Abschattung 280b auf, innerhalb der die Lichtintensität auf den Wert 0 abfällt.

Wie aus einem Vergleich der Figur 2a mit den Figuren 2b und 2c ersichtlich, die jeweils ein Messobjekt 280 mit einer größeren Höhe zeigen, ist die laterale Erstreckung der Abschattungsbereiche 280a und 280b von der jeweiligen Höhe des Messobjekts 280 abhängig. Ebenso ist die Stärke des diskreten Sprungs für die Lichtintensität 222 an der rechten Kante des Messobjekts 280 und die Stärke des diskreten Sprungs für die Lichtintensität 242 an der linken Kante des Messobjekts 280 von der Höhe des jeweils als Quader angenommenen Objekts abhängig.

In den Figuren 2a, 2b und 2c ist außerdem noch jeweils das Summensignal 262 eingezeichnet, welches sich für die in

Figur 1 dargestellte Lichterfassungseinrichtung 160 ergibt, wenn die beiden Graukeilbeleuchtungen 222 und 242 gleichzeitig aktiviert sind. Selbstverständlich kann das Summensignal 262 auch durch eine entsprechende Addition von zwei getrennten Bildaufnahmen ermittelt werden, wobei eine erste Bildaufnahme das Messobjekt 280 unter der Graukeilbeleuchtung 222 und die andere Bildaufnahme das Messobjekt 280 unter der Graukeilbeleuchtung 242 zeigt.

Wie aus allen Figuren 2a, 2b und 2c ersichtlich, gibt das jeweilige Summensignal 262 mit Ausnahme der Einbrüche bzw. Abfälle 262a und 262b der Summensignalen in den Bereichen der Abschattungen 280a und 280b in guter Näherung das Höhenprofil des Messobjekts 280 wieder.

So kann durch das Bilden des Summensignals 262 das mit dieser Anmeldung beschriebene Verfahren beispielsweise für eine einfache und schnelle Höhenvermessung von Paketen im Bereich der Postautomatisierung verwendet werden. Die Pakete können sich beispielsweise auf einem Förderband befinden und senkrecht zu der Zeichenebene mit einer vorgegebenen Geschwindigkeit transportiert werden. In diesem Fall weist die in Figur 1 dargestellte Lichterfassungseinrichtung 160 bevorzugt eine Zeilenkamera auf, die jeweils innerhalb der Triangulations- bzw. Zeichenebene eine Lichtzeile der Pakete vermisst. In Verbindung mit der bekannten Transportgeschwindigkeit des Förderbandes können die dadurch bestimmten Höhenprofile entlang der jeweiligen Lichtzeile in geeigneter Weise zu einem vollständigen dreidimensionalen Höhenbild zusammen gesetzt werden.

Es wird darauf hingewiesen, dass sich das beschrieben Verfahren zur Höhenbestimmung selbstverständlich auch für andere Arten von Messobjekten eignet, welche ein im Vergleich zu dem beschriebenen Messobjekt 280 komplexeres Höhenprofil aufweisen. In den Figuren 2a, 2b und 2c wurden lediglich aus Gründen einer einfachen Illustration des beschriebenen Messprinzips quaderförmige Messobjekte verwendet. So würde beispielsweise eine zusätzliche vertikale Stufe des Messobjekts zu einer für die eine Graukeilbeleuchtung zu einer weiteren Abschattung und für die andere Graukeilbeleuchtung zu einer weiteren Stufe im Intensitätssignal führen. Somit ist leicht einzusehen, dass mit dem beschriebenen Verfahren im Prinzip beliebig komplexere Höhenprofile erfasst werden können.

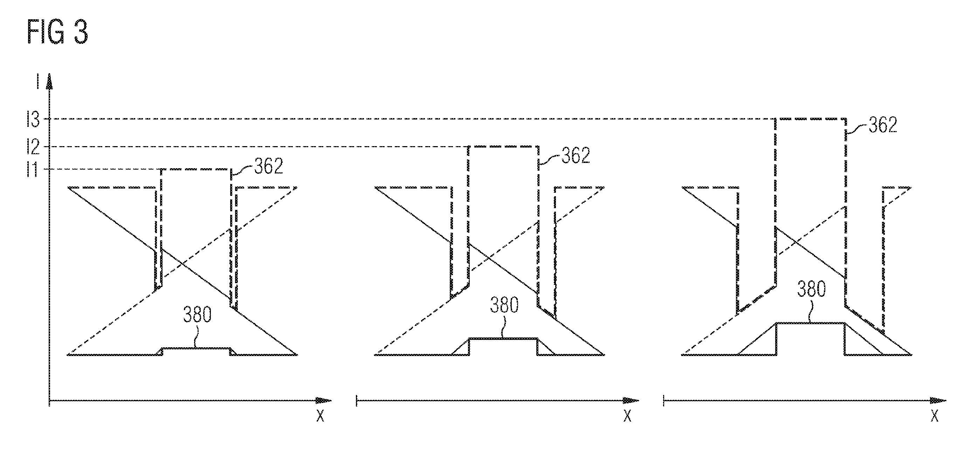

Figur 3 zeigt in einer kompakten Zusammenstellung die in den Figuren 2a, 2b und 2c abgebildeten Intensitätsverläufe und insbesondere die Summensignale 362. Es ist deutlich zu erkennen, dass im Bereich des Messobjekts 380 das Summensignal 362 mit zunehmender Höhe des Messobjekts 380 linear ansteigt.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Bezugszeichenliste

| | |
|---|---|
| 100 | Triangulationssensor |
| 110 | erste Lichterzeugungseinrichtung |
| 112 | Lichtquelle |
| 112a | Primärlichtstrahl |
| 113 | Optik |
| 114 | optisches Element / LCoS-Bauelement |
| 114a | Lichtstrahl |
| 118 | Optik |
| 120 | erste Beleuchtungsrichtung |
| 122 | erste Graukeilbeleuchtung / stetig ansteigender Intensitätsverlauf (erstes Beleuchtungslicht) |
| 123 | erste homogene Beleuchtung / räumlich konstantes Intensitätsprofil (drittes Beleuchtungslicht) |
| 130 | zweite Lichterzeugungseinrichtung |
| 132 | Lichtquelle |
| 132a | Primärlichtstrahl |
| 133 | Optik |
| 134 | optisches Element / LCoS-Bauelement |
| 134a | Lichtstrahl |
| 138 | Optik |
| 140 | zweite Beleuchtungsrichtung |
| 142 | zweite Graukeilbeleuchtung / stetig ansteigender Intensitätsverlauf (zweites Beleuchtungslicht) |
| 143 | zweite homogene Beleuchtung / räumlich konstantes Intensitätsprofil (viertes Beleuchtungslicht) |
| 150 | Beobachtungsrichtung |
| 152 | Optik |
| 160 | Lichterfassungseinrichtung |
| 170 | Auswerte- und Steuereinrichtung |
| 170a | Auswerteleitung |
| 170b | Steuerleitung |
| 170c | Steuerleitung |
| 180 | Messobjekt |
| $\vartheta 1$ | erster Triangulationswinkel |
| $\vartheta 2$ | zweiter Triangulationswinkel |
| | |
| 220 | erste Beleuchtungsrichtung |
| 222 | erste Graukeilbeleuchtung / stetig ansteigender Intensitätsverlauf (erstes Beleuchtungslicht) |
| 240 | zweite Beleuchtungsrichtung |
| 242 | zweite Graukeilbeleuchtung / stetig ansteigender Intensitätsverlauf (zweites Beleuchtungslicht) |
| 262 | Summensignal |
| 262a | Abfall/Einbruch im Summensignal |
| 262b | Abfall/Einbruch im Summensignal |
| 280 | Messobjekt |
| 280a | Abschattung |
| 280b | Abschattung |
| | |
| 362 | Summensignal |
| 380 | Messobjekt |

**Patentansprüche**

1. Verfahren zum Bestimmen der dreidimensionalen Oberfläche eines Messobjekts (180) nach dem Prinzip der Triangulation, das Verfahren aufweisend

   ● Beleuchten des Messobjekts (180) mittels eines ersten Beleuchtungslichts (122) unter einer ersten Beleuchtungsrichtung (120), wobei das erste Beleuchtungslicht (122) innerhalb einer ersten Triangulationsebene senkrecht zu der ersten Beleuchtungsrichtung (120) einen räumlich stetig ansteigenden ersten Intensitätsverlauf aufweist,
   ● Erfassen des durch das erste Beleuchtungslicht (122) beleuchteten Messobjekts (180) unter einer ersten Beobachtungsrichtung (150), welche zusammen mit der ersten Beleuchtungsrichtung (120) die erste Triangulationsebene aufspannt, mittels eines ersten Bildes,
   ● Beleuchten des Messobjekts mittels eines zweiten Beleuchtungslichts (142) unter einer zweiten Beleuchtungsrichtung (140), wobei das zweite Beleuchtungslicht (142) innerhalb einer zweiten Triangulationsebene senkrecht zu der zweiten Beleuchtungsrichtung (140) einen räumlich stetig ansteigenden zweiten Intensitätsverlauf aufweist,
   ● Erfassen des durch das zweite Beleuchtungslicht (142) beleuchteten Messobjekts (180) unter einer zweiten Beobachtungsrichtung (150), welche zusammen mit der zweiten Beleuchtungsrichtung (140) die zweite Triangulationsebene aufspannt, mittels eines zweiten Bildes und
   ● Bestimmen der dreidimensionalen Oberfläche des Messobjekts (180) basierend auf dem ersten Bild und dem zweiten Bild.

2. Verfahren nach Anspruch 1, wobei
   die erste Triangulationsebene und die zweite Triangulationsebene identisch sind.

3. Verfahren nach einem der Ansprüche 1 bis 2, wobei
   die erste Beobachtungsrichtung (150) und die zweite Beobachtungsrichtung (150) identisch sind.

4. Verfahren nach einem der Ansprüche 1 bis 3, wobei
   die erste Beleuchtungsrichtung (120) und die zweite Beleuchtungsrichtung (140) unterschiedlich sind.

5. Verfahren nach Anspruch 4, wobei
   ein erster Triangulationswinkel ($\vartheta 1$) zwischen der ersten Beleuchtungsrichtung (120) und der ersten Beobachtungsrichtung (150) und
   ein zweiter Triangulationswinkel ($\vartheta 2$) zwischen der zweiten Beleuchtungsrichtung (140) und der zweiten Beobachtungsrichtung (150) gleich groß sind.

6. Verfahren nach einem der Ansprüche 4 bis 5, wobei
   der erste Intensitätsverlauf (122) und der zweite Intensitätsverlauf (142) in einander entgegen gesetzten Richtungen ansteigen.

7. Verfahren nach Anspruch 6, zusätzlich aufweisend

   ● Bilden eines Summensignals (262) aus den durch die Höhenausdehnung des Messobjekts (180, 280) veränderten ersten und zweiten Intensitätsverläufen (222, 242).

8. Verfahren nach einem der Ansprüche 1 bis 7, zusätzlich aufweisend

   ● Beleuchten des Messobjekts (180) mittels eines dritten Beleuchtungslichts (123) unter einer dritten Beleuchtungsrichtung (120), wobei das dritte Beleuchtungslicht (123) innerhalb einer dritten Triangulationsebene senkrecht zu seiner Ausbreitungsrichtung ein räumlich konstantes Intensitätsprofil aufweist.

9. Verfahren nach Anspruch 8, zusätzlich aufweisend

   ● Beleuchten des Messobjekts (180) mittels eines vierten Beleuchtungslichts (143) unter einer vierten Beleuchtungsrichtung (140), wobei das vierte Beleuchtungslicht (143) innerhalb einer vierten Triangulationsebene senkrecht zu seiner Ausbreitungsrichtung ein räumlich konstantes Intensitätsprofil aufweist.

**10.** Verfahren nach Anspruch 9, wobei
das Beleuchten des Messobjekts (180) mittels des dritten Beleuchtungslichts (123) und
das Beleuchten des Messobjekts (180) mittels des vierten Beleuchtungslichts (143) nacheinander durchgeführt wird.

**11.** Vorrichtung zum Bestimmen der dreidimensionalen Oberfläche eines Messobjekts (180) nach dem Prinzip der Triangulation, insbesondere zur Durchführung des Verfahrens nach einem der Ansprüche 1 bis 10, die Vorrichtung (100) aufweisend

● eine erste Lichterzeugungseinrichtung (110) zum Erzeugen eines ersten Beleuchtungslichts (122) unter einer ersten Beleuchtungsrichtung (120),

wobei das erste Beleuchtungslicht (122) innerhalb einer ersten Triangulationsebene senkrecht zu der ersten Beleuchtungsrichtung (120) einen räumlich stetig ansteigenden ersten Intensitätsverlauf aufweist,

● eine zweite Lichterzeugungseinrichtung (140) zum Erzeugen eines zweiten Beleuchtungslichts (142) unter einer zweiten Beleuchtungsrichtung (140),

wobei das zweite Beleuchtungslicht (142) innerhalb einer zweiten Triangulationsebene senkrecht zu der zweiten Beleuchtungsrichtung (140) einen räumlich stetig ansteigenden zweiten Intensitätsverlauf aufweist,

● zumindest eine Lichterfassungseinrichtung (160) zum Erfassen unter zumindest einer Beobachtungsrichtung (150) des durch das erste Beleuchtungslicht (122) beleuchteten Messobjekts (180) mittels eines ersten Bildes und des durch das zweite Beleuchtungslicht (142) beleuchteten Messobjekts (180) mittels eines zweiten Bildes,

wobei die zumindest eine Beobachtungsrichtung zusammen mit der ersten Beleuchtungsrichtung (120) die erste Triangulationsebene und zusammen mit der zweiten Beleuchtungsrichtung (140) die zweite Triangulationsebene aufspannt, und

● eine Auswerteeinrichtung (170) zum Bestimmen der dreidimensionalen Oberfläche des Messobjekts (180) basierend auf dem ersten Bild und dem zweiten Bild.

**12.** Vorrichtung nach Anspruch 11, bei der
die erste (110) und/oder die zweite Lichterzeugungseinrichtung (130) eine Lichtquelle (112, 132) und ein optisches Element (114, 134) aufweist, wobei
das optische Element (114, 134) derart eingerichtet ist, dass ein von der Lichtquelle (112, 132) erzeugter Primärlichtstrahl (112a, 132a) hinsichtlich seines transversalen Intensitätsprofils

- bei einem ersten Betriebszustand des optischen Elements (114, 134) in einen räumlich stetig ansteigenden Intensitätsverlauf überführbar ist und
- bei einem zweiten Betriebszustand des optischen Elements (114, 134) in ein räumlich konstantes Intensitätsprofil überführbar ist.

**13.** Vorrichtung nach Anspruch 12, bei der das optische Element ein LCoS-Bauelement (114, 134) ist.

**14.** Vorrichtung nach einem der Ansprüche 11 bis 13, bei der die Lichterfassungseinrichtung (160) eine Zeilenkamera aufweist.

**15.** Computerlesbares Speichermedium, in dem ein Programm zum Bestimmen der dreidimensionalen Oberfläche eines Messobjekts (180) nach dem Prinzip der Triangulation gespeichert ist, das Programm, wenn es von einem Prozessor ausgeführt wird, zum Durchführen des Verfahrens nach einem der Ansprüche 1 bis 10 eingerichtet ist.

**16.** Programm-Element zum Bestimmen der dreidimensionalen Oberfläche eines Messobjekts (180) nach dem Prinzip der Triangulation, das Programm-Element, wenn es von einem Prozessor ausgeführt wird, zum Durchführen des Verfahrens nach einem der Ansprüche 1 bis 10 eingerichtet ist.

FIG 1

EP 2 090 863 A2

FIG 2A

FIG 2B

FIG 2C

FIG 3

EP 2 090 863 A2